# EUROPEAN PATENT APPLICATION

(11) **EP 4 807 963 A1**
(43) Date of publication of application: **16.09.2026**
(21) Application number: 26162743.4
(22) Date of filing: 05.03.2026
(51) Int. Cl.: H02M 1/32, H02M 7/49, H02H 7/125, H02M 5/14, H02M 5/458, H02M 7/06

(54) **MULTICELL INVERTER WITH OUTPUT BYPASS, DC CROWBAR AND RECTIFIERS WITH SERIES FUSED DIODES**

(30) Priority: 12.03.2025 IT 202500005084
(71) Applicant: Nidec ASI S.p.A., 20092 Cinisello Balsamo MI (IT)
(72) Inventor: Gianluca, Postiglione, 20092 Cinisello Balsamo MI (IT); Mascaretti, Marco, 20092 Cinisello Balsamo MI (IT); Proverbio, Matteo, 20092 Cinisello Balsamo MI (IT); Rossi, Roberto, 20092 Cinisello Balsamo MI (IT)
(74) Representative: Perani & Partners S.p.A.

(57) **Abstract**

An electrical converter (1) comprises conversion modules (3), with input nodes (31) connectable to distinct sets of secondary windings (22) of a transformer (2), and output nodes (32) that connect distinct modules (3). For each module (3), a rectifier (34) connects the input nodes (31) to a DC bus (33), and an inverter (35) is connected to the DC bus (33) to supply the output nodes (32). A bypass circuit (36), in case of a fault, can connect the output nodes (32) of the module (3) to each other. A crowbar element (37), in case of a fault, connects the positive and negative pole conductors (331, 332) of the DC bus (33) to each other, before activating the bypass circuit (36). A plurality of fuses (344) are each placed in series with a respective rectifier element (341) of the rectifier (34), to open rapidly when the crowbar element (37) intervenes.

## Description

### Technical Field

The present invention is developed in the field of electrical converters, in particular multilevel converters with cascaded H-Bridge topology.

### Background Art

Multilevel converters with cascaded H-Bridge topology are modular converters supplied in alternating current and usable, for example, to supply an electric motor, also in alternating current, for example a three-phase motor.

The converter comprises multiple conversion modules for each output phase, and the modules related to the same phase have single-phase output nodes connected in series with each other. The groups of modules of the three phases can be connected to each other in a star configuration.

These converters are supplied by a transformer with a high number of secondary windings. Each secondary winding, in particular, supplies a module of the converter.

When a fault occurs in one of the modules, this risks compromising the supply of one of the output phases of the converter. It is therefore known to provide each module with a bypass circuit, which, in the presence of a fault, connects the output nodes of the module in a short circuit, allowing the current of the other series-connected modules to circulate.

In several known examples, when one of the modules is bypassed, it is possible to keep the converter active with a reduced output voltage, if the voltages of the series modules and their number are such that the modules were already operating at maximum before the fault, or to keep the converter active with the same voltage as before the fault, if the modules are numerous enough to allow it to work with reduced performance before the fault.

Each module comprises a rectifier, usually with diodes, and a single-phase inverter. It is known to protect both the module and the transformer from high current faults by placing fuses at the input nodes, upstream the rectifier.

However, there are various fault cases that do not cause fault currents sufficient to trigger the fuses, for example faults in an inverter driver. In this scenario, still significant and asymmetrical currents can continue to circulate in the module even after the bypass, with the risk of damaging other components, including the transformer, which can propagate the fault to still other modules.

The prior art document US 6229722 shows an example of a multilevel converter with cascaded H-Bridge topology, with a crowbar thyristor connected between the two pole conductors of the DC bus, which is located between the rectifier and the inverter of the module. The thyristor is normally inactive, and its activation is commanded in case of a fault. With its activation, a short circuit is created between the two poles of the DC bus, which draws a high current from the transformer through the rectifier.

On the DC bus, upstream of the thyristor, a fuse is provided, which opens when subjected to the short-circuit current triggered by the thyristor. There is thus a guarantee that, in case of faults, the inverter no longer draws current from the transformer through the rectifier.

The closing event of the thyristor remains, however, a moment of stress for some components of the system, including the transformer itself, which must be designed to be particularly robust, in light of the energy transferred to it during the fault.

### Summary of the invention

The object of the present invention is to improve the protection of the transformer and of the module in fault situations, reducing the stress conditions when the thyristor is activated, and thus the extent of the damage or the risk of its propagation to other components of the system.

This and other objects are achieved by an electrical converter according to any one of the appended claims.

The invention, in a manner analogous to US 6229722, provides a crowbar component that can, when necessary, connect the positive and negative pole conductors of the DC bus, triggering a current such as to cause a fuse protection to intervene.

However, according to the invention, there is not a single fuse connected directly in series to the DC bus, as in US 6229722, and the fuses are not even connected between the input nodes and the rectifier, as was provided in other prior examples (lacking the crowbar thyristor). Instead, the thyristors are included in the rectifier, each in series with a single rectifier element, for example a diode, such that the two components share the same current.

This positioning is advantageous because it is what allows the fuses to be sized with the lowest possible intervention current. As is known in the art, fuses with lower intervention currents are also the fastest to intervene. The invention therefore makes the intervention of the fuses faster, reducing the time during which the current triggered by the crowbar element circulates, and thus reducing the energy transferred to the various components of the system during this procedure. Stress is therefore reduced, and the components can be sized to be less robust.

Further features and advantages of the invention will be recognizable to a person skilled in the art from the following detailed description of exemplary embodiments of the invention.

### Brief description of the figures

For a better understanding of the following detailed description, some embodiments of the invention are illustrated in the accompanying drawings, in which:
- figure 1 schematically shows an example of a multilevel converter with cascaded H-Bridge topology,
- figure 2 schematically shows a module of the converter of figure 1, according to a prior art example, and
- figures 3-6 schematically show a module of the converter of figure 1, according to four different embodiments of the invention.

### DETAILED DESCRIPTION

The invention relates to an electrical converter 1, preferably a multilevel converter with cascaded H-Bridge topology. However, a person skilled in the art will recognize that the teachings of the invention can also be applied to modular converters that do not correspond exactly to multilevel converters with cascaded H-Bridge topology, according to some variants that will be commented on below.

For the operation of the converter, the presence of a transformer 2 is provided, which can be supplied separately from the converter 1, or as a part thereof. In the following, the converter 1 will be described in a condition assembled with the transformer 2.

The transformer 2 comprises, in addition to a ferromagnetic core, at least one set of primary windings 21, intended for connection to the electrical grid, preferably in medium voltage (CEI 99-2 standard), and a plurality of sets of secondary windings 22. Each set of windings 21, 22 can be a set of single-phase windings, or a set of polyphase windings, preferably three-phase. Therefore, each set of windings 21, 22 comprises a plurality of phase conductors. Preferably, distinct sets of windings 21, 22 are electrically isolated from each other, while they can be magnetically coupled through the ferromagnetic core of the transformer 2.

As is known, corresponding phase conductors of distinct sets of secondary windings 22 can be in phase with each other, or each phase conductor of a set of secondary windings 22 can be electrically phase-shifted from the phase conductors of all the other sets of secondary windings 22.

The converter 1 comprises a plurality of conversion modules 3, connected to each other and connected to respective sets of secondary windings 22 of the transformer 2.

In more detail, each conversion module 3 comprises input nodes 31 connected to the phase conductors of a respective set of secondary windings 22. The input nodes 31 of distinct modules 3 are generally connected to distinct sets of secondary windings 22.

Each conversion module 3 also comprises output nodes 32. The output nodes 32 of distinct conversion modules 3 are connected to each other, in particular it is preferable that the output nodes 32 of at least a subset of the modules 3 are connected in series with each other.

In the preferred embodiment, shown in the figures, the conversion modules 3 are organized into a plurality of groups of phase modules 3a, 3b, 3c, for example three groups of phase modules for three electrical output phases of the converter 1.

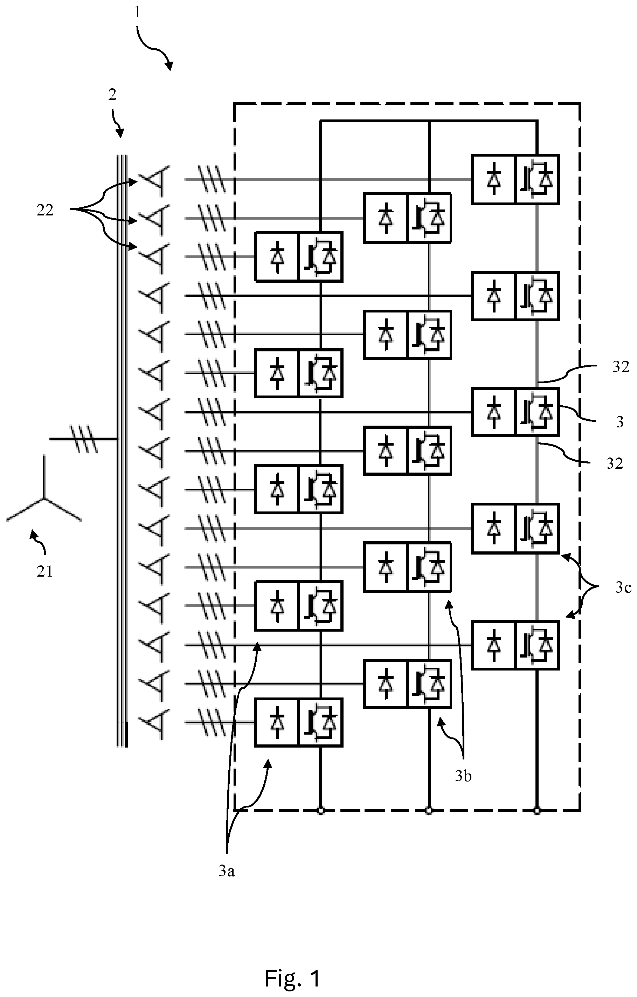

In more detail, each group of phase modules 3a, 3b, 3c comprises a certain number of conversion modules 3 (five modules 3 per group in figure 1) with the output nodes 32 connected in series with each other. Therefore, the modules 3 of the same group 3a, 3b, 3c share the same current at the output nodes, and are preferably configured to generate output voltages in phase with each other.

The different groups of modules 3a, 3b, 3c are also connected to each other to provide the output voltage and current of the converter 1, which can supply, for example, an electric motor. Preferably, in the case of a converter 1 with a three-phase output, the different groups of modules 3a, 3b, 3c are connected in a star configuration. Therefore, each group of phase modules 3a, 3b, 3c is configured to supply a respective output phase of the converter 1.

Each conversion module 3 comprises a DC bus 33 in direct current, with a positive pole conductor 331, a negative pole conductor 332, and a capacitor 333 connected between the positive and negative pole conductors 331, 332.

Furthermore, each conversion module 3 comprises a rectifier 34, which connects the input nodes 31 to the DC bus 33, and an inverter 35, which, at least in some operating configurations, connects the DC bus 33 to the output nodes 32. When the output nodes 32 of the different modules 3 are connected to the respective inverters 35, the series connection of the output nodes 32 of multiple modules 3 determines that the respective inverters 35 are also in series with each other.

In the illustrated embodiment, the rectifiers 34 are polyphase rectifiers, in particular three-phase, while the inverters 35 are single-phase inverters. However, the invention mainly concerns internal operating dynamics of a single module 3, which can also be applied to modules 3 with a single-phase rectifier 34, and/or modules 3 with a polyphase inverter 35, for example three-phase. In the case of a three-phase inverter 35, it is not necessary to organize the modules 3 into distinct groups of phase modules 3a, 3b, 3c, but for example the output nodes 32 of all the modules 3 can be connected in series with each other.

The rectifier 34 comprising a plurality of rectifier elements 341, preferably diodes. However, alternative rectifier elements 341, such as thyristors, can also be provided.

In the illustrated embodiment, the rectifier 34 is a bridge circuit. More generally, the rectifier 34 preferably comprises a plurality of branches 342, 343, each of which connects an input node 31 to one of the positive pole conductor 331 and the negative pole conductor 332 of the DC bus 33. Each branch comprises at least one rectifier element 341.

In detail, for each input node 31, the rectifier 34 comprises a positive branch 342 and a negative branch 343. The positive branch 342 connects the input node 31 to the positive pole conductor 331, while the negative branch 343 connects the input node 31 to the negative pole conductor 332. Thus, the number of branches 342, 343 is double the number of input nodes 31.

As is known, the inverter 35 comprises a plurality of controllable switches 351, for example IGBTs. In the illustrated embodiment, the inverter is an H-bridge. Different types of inverters do not, however, prejudice the operation of the invention.

Each module 3 comprises a bypass circuit 36, arranged between the inverter 35 and the output nodes 32. The bypass circuit 36 is configured to switch between an operating state and a bypass state.

In the operating state, the output nodes 32 are connected to the inverter 35, without being directly connected to each other. Therefore, the bypass circuit 36 does not prevent the inverter 35 from applying a potential difference between the output nodes 32, and the module 3 can contribute to the output voltages and currents of the converter 1.

Instead, in the bypass state, the output nodes 32 of the module 3 are connected in a short circuit to each other, and optionally at least one of the output nodes 32 can be disconnected from the inverter 35. Therefore, the module 3 is bypassed with respect to the other modules 3 to which it is connected via the output nodes 32. In particular, the output nodes 32 are substantially at the same voltage and the module 3 does not contribute to the output voltage of the converter 1. Furthermore, the current flowing between the output nodes 32 is determined by the control of the other modules 3 to which it is connected.

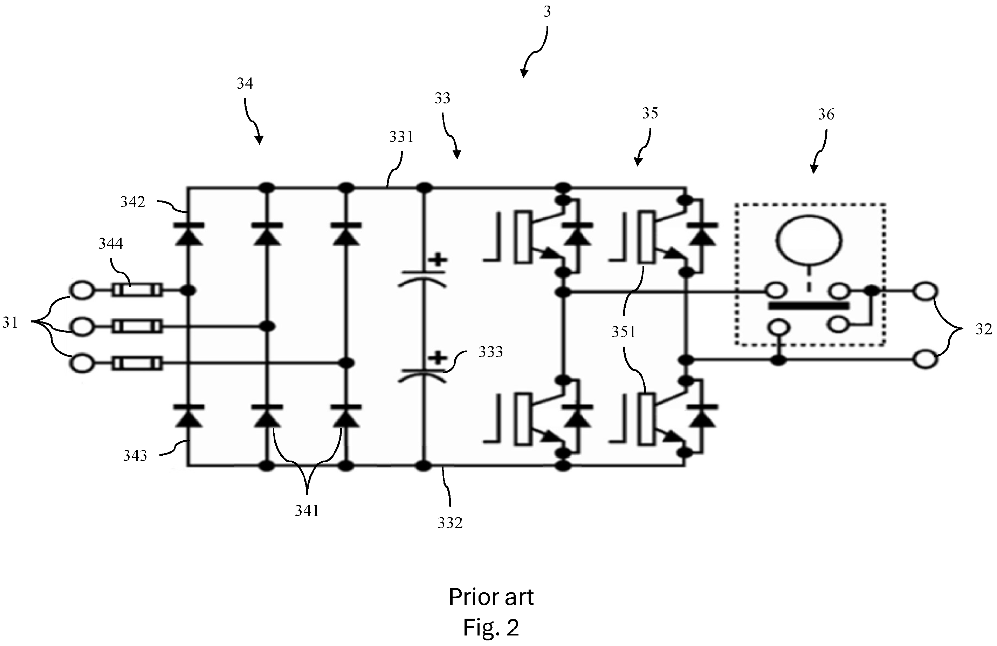

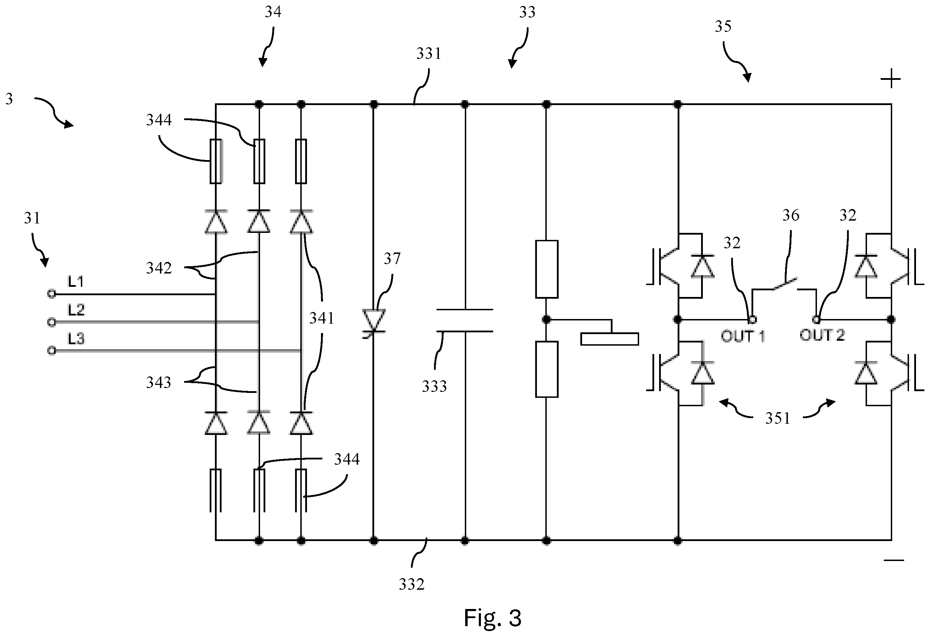

The bypass circuit 36 can comprise a switch, as shown in figures 3-6. Alternatively, as in the prior art of figure 2, the bypass circuit 36 can comprise a contactor. In other embodiments, as already known in the art for example from US 6229722, the bypass circuit 36 can include a second diode rectifier connected to a thyristor to short-circuit the second rectifier.

Each module 3 comprises a crowbar element 37, connected between the positive pole conductor 331 and the negative pole conductor 332 of the DC bus 33. The crowbar element 37 is controllable to connect and disconnect the positive and negative pole conductors 331, 332 to and from each other. In particular, during normal operation of the module 3, the positive and negative pole conductors 331, 332 are not directly connected to each other. Instead, the activation of the crowbar element 37, to connect the positive and negative pole conductors 331, 332 to each other, short-circuits the DC bus 33 and its capacitor 333, thus de-energizing the inverter 35.

It should be noted that, in order to create the short-circuit conditions, no significant impedances are connected in series with the crowbar element.

In the preferred embodiment, the crowbar element 37 is a thyristor. Embodiments are not excluded, however, in which the crowbar element is a switch controllable both in opening and in closing.

Preferably, the crowbar element 37 is connected upstream the capacitor 333, that is, in a position along the positive and negative pole conductors 331, 332, between the rectifier 34 and the capacitor 333.

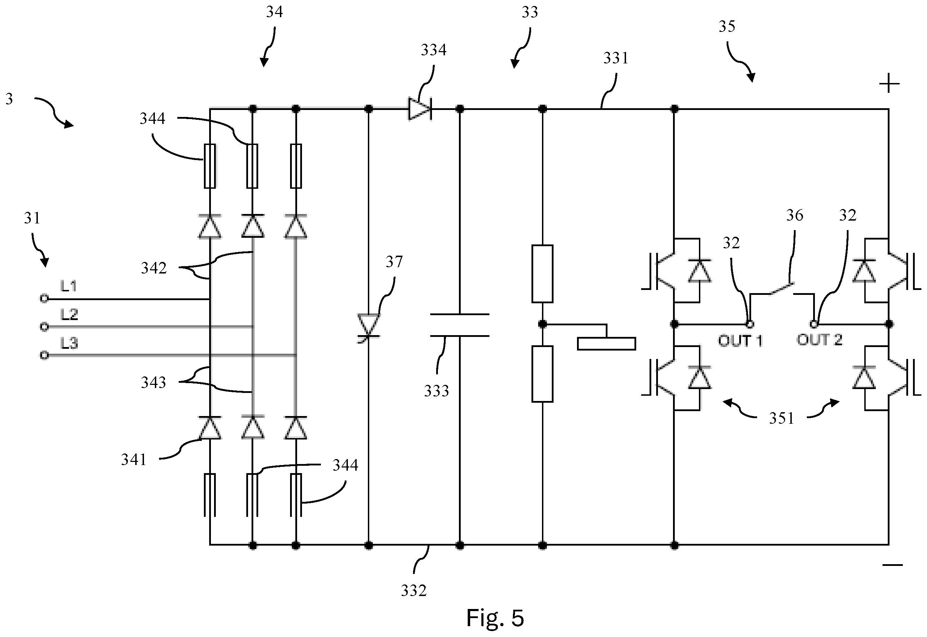

Optionally, the DC bus 33 comprises a diode 334 (figures 5-6), placed in series with the positive or negative pole conductor 331, 332. In particular, the diode 334 is arranged between the crowbar element 37 and the capacitor 333. Furthermore, the diode 334 is oriented so as to block a current from the capacitor 333 towards the crowbar element 37, when the crowbar element 37 connects the positive and negative pole conductors 331, 332 to each other. This advantageously protects the crowbar element 37 from the discharge current of the capacitor 333, preserving it from the risk of faults.

The invention provides that the rectifier 34 comprises a plurality of fuses 344, each placed in series with a respective rectifier element 341 of the rectifier 34. Therefore, each fuse 344 is positioned in a respective branch 342, 343, positive or negative, of the rectifier 34.

In this context, it is understood that the rectifier element 341 and the fuse 344 are in series in the sense that, under normal operating conditions, they share the same current. Conversely, if, during normal operation of the module 3, the current of the fuse 344 is significantly different from the current of the rectifier element 341, for example because a node is present between them that draws or injects current from other components, then these are not to be considered connected in series.

In particular, fuses 344 downstream the rectifier 34, for example fuses 344 connected in series to the positive or negative pole conductor 331, 332 of the DC bus 33 (i.e. in series with the diode 334), are not to be considered connected in series with a rectifier element 341, nor are fuses 344 upstream the rectifier 34, for example fuses 344 connected in series to the input nodes 31 upstream the ramifications identified by the positive and negative branches 342, 343 (figure 2).

In one embodiment, all the branches 342, 343 of the rectifier 34 comprise a fuse 344. Therefore, the number of fuses 344, as well as the number of positive and/or negative branches 342, 343 that includes a fuse 344, is equal to the total number of positive and negative branches 342, 343, i.e., double the number of input nodes 31.

Considering that when some fuses 344 open, the possible paths for current circulation in the rectifier 34 are reduced, the same safety can be achieved even with a slightly reduced number of fuses 344. In particular, the number of branches 342, 343 comprising a fuse can be equal to double the number of input nodes 31 (reduced by zero), or this number reduced by one or two. For example, in an embodiment with a three-phase rectifier 34, the minimum number of fuses 344 is four.

If the reduction is one, it is indifferent which branch 342, 343 is without a fuse 344. By reducing by two, more numerous combinations are possible. In particular, it is possible for a positive branch and a negative branch 342, 343 connected to a common input node 31 to be without fuses 344. Alternatively, it is possible for a positive branch and a negative branch 342, 343 connected to distinct input nodes 31 to be without fuses 344. In both cases, the number of positive branches 342 provided with a fuse 344 and the number of negative branches 343 provided with a fuse 344 are both equal to the number of input nodes 31 reduced by one. In yet another alternative case, the two branches without a fuse 344 can both be positive branches 342, or both negative branches 343.

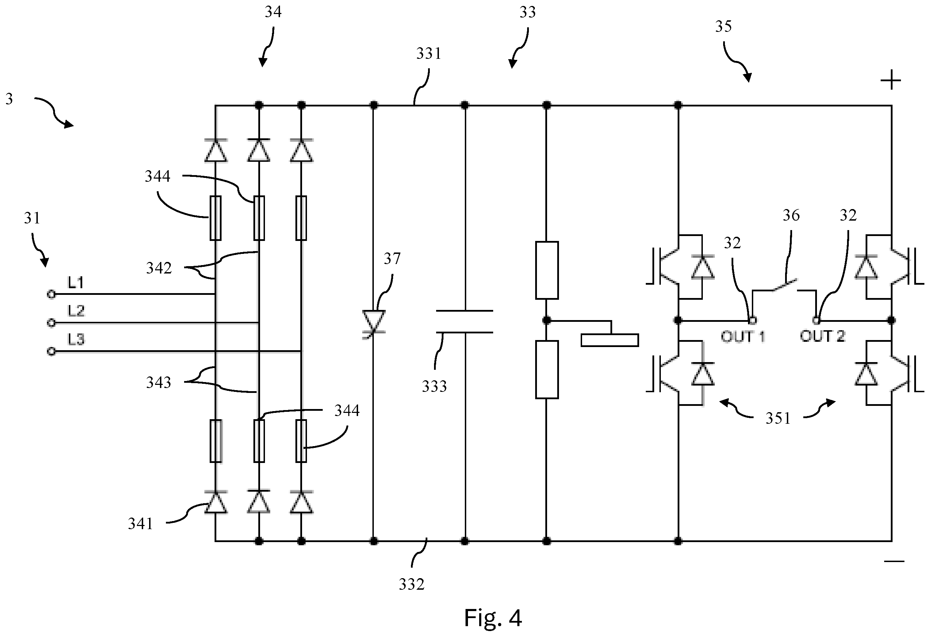

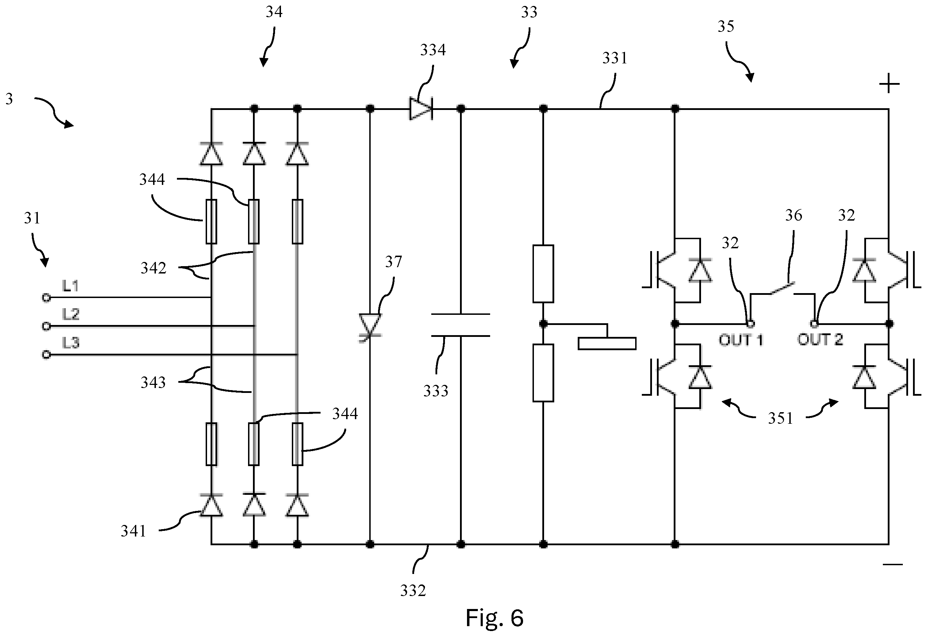

For each branch 342, 343 provided with a fuse 344, the fuse 344 can be found indifferently upstream or downstream the respective rectifier element 341, i.e., between the rectifier element 341 and the respective input node 31 (figures 4, 6), or between the rectifier element 341 and the respective pole conductor 331, 332, in particular the positive pole conductor 331 for the positive branches 342, and the negative pole conductor 332 for the negative branches 343 (figures 3, 5).

The fuses 344 are sized to intervene when subjected to a predetermined intervention current. The intervention current is chosen to be not greater than a current that flows through the fuses 344 when the crowbar element 37 connects the positive and negative pole conductors 331, 332 to each other.

This ensures that, upon activation of the crowbar element 37, the fuses 344 open and interrupt the current supplied by the rectifier 34 to the DC bus 33. It should be observed that the different fuses 344 might not intervene at the exact same time, due to their position with respect to the different electrical phases and to the moment of an electrical oscillation period in which the crowbar element 37 intervenes.

At the same time, as is normal, the intervention current is chosen to be higher than a current that flows through the fuses 344 under a nominal load condition of the module 3.

It should be observed that the fuse 344 is activated because of thermal reasons, i.e., by energy developed by the Joule effect. Therefore, it is evaluated whether or not the intervention current in a fuse is exceeded in terms of the root mean square value of the current, and not for example the peak value. The positioning of the fuses 344 according to the invention is advantageous with respect to that of US 6229722, in that, under normal operating conditions of the module 3, for example under nominal load, the current flowing through the individual branches 342, 343 of the rectifier 344 is significantly lower, in root mean square value, than that which reaches the DC bus 33. Therefore, with the invention it is possible to select a lower intervention current, which determines a faster activation of the fuse 344.

Also in comparison with fuses placed upstream of the rectifier 34, the positioning of the invention is advantageous because under normal operating conditions the current in root mean square value is lower in the ratio of 1/√2, and therefore a lower intervention current can be chosen. Instead, the currents at the moment of activation of the crowbar element 37 are substantially equal, and therefore the invention guarantees a faster opening of the fuses 344.

With the shorter activation time of the fuses, the current triggered by the crowbar element 37 circulates for a shorter time and less energy is transferred to the components affected by this current, which are subjected to less stress. Despite this measure, it is preferable that the rectifier elements 341, whether they are diodes or not, are press-pack type semiconductor elements. These rectifier elements 341 are less subject to the dispersion of molten material in case of damage by overcurrent, and thus they also limit the risk of damage propagation to other components.

The converter 1 comprises at least one controller, optionally a controller for each module 3. The controller is configured to place the converter 1 in a safe state upon the activation of at least one predetermined fault condition. The fault condition can be detected by the controller itself, based on measurement signals acquired on the converter 1, or it can be detected by another component and signaled to the controller, or it can be signaled to the controller by an operator.

Therefore, when the fault conditions occur, the controller is configured to command the crowbar element 37 to connect the positive and negative pole conductors 331, 332 to each other, and only subsequently to command the bypass circuit 36 to switch from the operating state to the bypass state. In this way, there is certainty that the inverter 35 is de-energized before switching to the bypass condition.

The controller dedicated to this function can coincide with a controller that also commands the operation of the inverter 35, or it can be a separate controller.

Obviously, a person skilled in the art can make numerous equivalent modifications to the variants described above, without thereby departing from the scope of protection defined by the appended claims.

## Claims

1. Electrical converter (1), comprising a plurality of conversion modules (3), the conversion modules (3) comprising:
- input nodes (31) connectable to a respective set of secondary windings (22) of a transformer (2),
- a DC bus (33) in direct current, having a positive pole conductor (331) and a negative pole conductor (332),
- a rectifier (34) connecting the input nodes (31) to the DC bus (33), comprising a plurality of rectifier elements (341),
- an inverter (35) connected to the DC bus (33),
- output nodes (32), wherein output nodes (32) of distinct conversion modules (3) are connected to each other,
- a bypass circuit (36) arranged between the inverter (35) and the output nodes (32), wherein the bypass circuit (36) is configured to switch between an operating state, in which the output nodes (32) are connected to the inverter (35), and a bypass state, in which the output nodes (32) are connected to each other,
- a crowbar element (37), controllable to connect and disconnect the positive and negative pole conductors (331, 332) of the DC bus (33),
**characterized in that:**
- the rectifier (34) comprises a plurality of fuses (344), each placed in series with a respective rectifier element (341) of the rectifier (34).

2. Converter (1) according to claim 1, wherein:
- the rectifier (34) comprises a plurality of branches (342, 343), each of which connects an input node (31) to one among the positive and negative pole conductor (331, 332) of the DC bus (33), each branch (342, 343) comprising at least one rectifier element (341), and
- each fuse (344) is positioned in a respective branch (342, 343) of the rectifier (34).

3. Converter (1) according to claim 2, wherein:
- each conversion module (3) comprises a predetermined number of input nodes (31), preferably three input nodes (31) for three electrical phases,
- for each input node (31), the rectifier (34) comprises a positive branch (342) connecting the input node (31) to the positive pole conductor (331) and a negative branch (343) connecting the input node (31) to the negative pole conductor (332), and
- for a number of positive and/or negative branches (342, 343) equal to twice the predetermined number of input nodes (31), reduced by zero, one or two, each branch (342, 343) comprises a respective fuse (344).

4. Converter (1) according to any one of claims 1 to 3, comprising a controller, configured to, upon activation of at least one predetermined fault condition, in order:
- command the crowbar element (37) to connect the positive and negative pole conductors (331, 332) to each other, and
- command the bypass circuit (36) to switch from the operating state to the bypass state.

5. Converter (1) according to any one of claims 1 to 4, wherein the fuses (344) are sized to intervene when subject to a predetermined intervention current, not greater than a current flowing in the fuses (344) when the crowbar element (37) connects the positive and negative pole conductors (331, 332) to each other.

6. Converter (1) according to any one of claims 1 to 5, wherein the rectifier elements (341) are press-pack semiconductor elements, preferably press-pack diodes.

7. Converter according to any one of claims 1 to 6, wherein:
- the DC bus (33) comprises a capacitor (333) connected between the positive and negative pole conductors (331, 332), and
- the DC bus (33) comprises a diode (334), placed in series with the positive or negative pole conductor (331, 332), between the crowbar element (37) and the capacitor (333).

8. Converter (1) according to any one of claims 1 to 7, wherein no impedances are connected in series to the crowbar element (37).

9. Converter (1) according to any one of claims 1 to 8, wherein said crowbar element (37) is a thyristor.

10. Converter (1) according to any one of claims 1 to 9, wherein the conversion modules (3) are organized into a plurality of groups of phase modules (3), wherein each group of phase modules (3) comprises conversion modules (3) with the output nodes (32) connected in series with each other.

11. Converter (1) according to any one of claims 1 to 10, wherein, for each conversion module (3), the rectifier (34) is a three-phase rectifier (34), preferably a three-phase diode rectifier bridge (34), and the inverter (35) is a single-phase inverter (35).
